# EUROPÄISCHE PATENTANMELDUNG

(11) **EP 0 973 313 A1**
(43) Veröffentlichungstag der Anmeldung: **19.01.2000**
(21) Anmeldenummer: 98810681.1
(22) Anmeldetag: 16.07.1998
(51) Int. Cl.: H04M 3/50

(54) **Schaltungsanordnung und Verfahren zum Betreiben eines Call-Centers**

(71) Anmelder: Ascom Hasler AG, CH-3000 Bern 14 (CH)
(72) Erfinder: Brunner, Dierk, 3096 Oberbalm (CH); Bengtsson, Annika, 3012 Bern (CH); Stuber, Andreas, 3011 Bern (CH)
(74) Vertreter: Roshardt, Werner Alfred, Dipl.-Phys.

(57) **Zusammenfassung**

Im öffentlichen Telefonnetz (1) ist eine INI-Schaltung (5) mit einer Standard-Schnittstelle (7) vorgesehen, über welche mit einem vom Telefonnetz (1) unabhängigen Call-Center-Server (9) Daten ausgetauscht werden können. Ferner verfügen sowohl die INI-Schaltung (5) als auch der Call-Center-Server (9) über einen Speicher (6 bzw. 10) mit Daten, welche die zur Verfügung stehenden Arbeitsplätze mit Call-Center-Server-Funktion und die gegenwärtig besetzten am Call-Center angeschlossenen Arbeitsplätze bezeichnen. Eine Steuerschaltung sorgt dafür, daß die Daten hinsichtlich der freien und besetzten Arbeitsplätze bzw. Telefonleitungen in der INI-Schaltung (5) und im Call-Center-Server (9) ständig aktuell sind. Im Falle von eingehenden Anrufen nimmt der Call-Center-Server (9) eine Zuteilung zu einem verfügbaren Arbeitsplatz vor und überträgt die vorgenommene Zuteilung an die INI-Schaltung (5), welche im Telefonnetz (1) eine direkte Verbindung zum ausgewählten Arbeitsplatz in die Wege leitet. Bei ausgehenden Rufen wird der "besetzt"-Zustand zunächst von der INI-Schaltung (5) festgestellt, welche die entsprechenden Daten dann an den Call-Center-Server (9) weiterleitet, so daß der Call-Center-Server (9) danach nicht eine Zuteilung an einen Arbeitsplatz vornimmt, dessen Telefonleitung bereits besetzt ist.

## Beschreibung

### Technisches Gebiet

Die Erfindung betrifft eine Schaltungsanordnung und ein Verfahren zum Betreiben eines Call-Centers, wobei ein öffentliches Telefonnetz mit Vermittlungszentralen und mit einer INI-Schaltung mit Speicher für das Routing von angeforderten Verbindungen vorgesehen sind.

### Stand der Technik

Die Globalisierung der Märkte, der zunehmende Wettbewerbsdruck und sinkende Kundentreue machen es erforderlich, daß die Unternehmen unter Einsatz der Computer-Technologie und der modernen Telekommunikation Kundennähe suchen. Ein wesentlicher Aspekt ist dabei der individuelle Kundenkontakt. Individuell heißt dabei, auf die dem Unternehmen (z.B. aufgrund früherer Bestellungen) bekannten Präferenzen und Wünsche des Kunden zugeschnitten. Ebenso wichtig ist die gute Erreichbarkeit. Der Kunde möchte direkt mit dem richtigen Ansprechpartner Kontakt aufnehmen können, ohne daß er sich mit der Innenstruktur des Unternehmens auseinandersetzen muß.

Untersuchungen haben gezeigt, daß im Durchschnitt nur etwa jeder fünfte Telefonanruf erfolgreich ist und dass zwei von drei Anrufen verlorengehen oder bei einem nicht zuständigen Ansprechpartner enden.

Von Vorteil ist es auch, wenn der Ansprechpartner während des Telefonats auf die relevanten Daten Zugriff hat. Es ist bekannt, eine PBX-Anlage (PBX = Private Branch Exchange) mit einem Computer zu verbinden, welcher Zugriff auf ein elektronisches Telefonverzeichnis hat, so daß bei einem eintreffenden Anruf anhand der signalisierten Telefonnummer automatisch Name und Anschrift des Anrufenden auf einem Bildschirm angezeigt und/oder von einem Computerprogramm weiter verarbeitet werden kann (CTI = Computer Telephony Integration). Es handelt sich dabei um eine technische Lösung, die von einem am öffentlichen Telefonnetz angeschlossenen Unternehmen selbst gekauft und betrieben werden kann.

Es ist auch bekannt, daß auf der Ebene der öffentlichen Telefonnetzwerke effiziente Anrufweiterleitungen implementiert werden können (z. B. ACD-Lösungen, ACD = Automatic Call Diversion, welche von außen unter einer Nummer erreicht werden können, wobei die Anrufe intern auf eine größere Anzahl von Arbeitsplätzen z.B. halbautomatisch oder automatisch verteilt werden.) Der Netzwerkbetreiber kann z.B. in verschiedenen Regionen Anrufzentralen unter der gleichen Nummer installieren, wobei das Netzwerk den Anrufenden automatisch mit der nächstgelegenen Zentrale verbindet (Anrufweiterleitung mit Zielnummer abhängig von der Region). Es ist auch bekannt, diese Zentralen miteinander zu verbinden derart, daß bei Überlastung einer Zielnummer der Anruf automatisch an eine andere Zielnummer des Netzwerkes weitergeleitet wird. Der Anrufende, der z.B. eine Auskunft über einen Telefonanschluß (Telefonnummer, Anschrift) erhalten möchte, braucht nur die ihm bekannte Nummer der Telefon-Auskunft zu wählen und wird direkt mit einer jeweils freien Auskunftsperson einer der Anrufzentralen des Netzwerkes verbunden.

Telemarketing und Telesales erweisen sich als effiziente Hilfsmittel bei der Akquisition von Neukunden oder Folgeaufträgen. Es entwickelt sich daher ein Bedürfnis nach leichtem und kostengünstigem Zugang zur entsprechenden Telekommunikations- und Computer-Technik.

### Darstellung der Erfindung

Aufgabe der Erfindung ist es, eine Schaltungsanordnung anzugeben, welche es einem vom Netzwerkbetreiber unabhängigen Unternehmen ermöglicht, Call-Center-Lösungen mit im wesentlichen demselben Komfort zu realisieren, wie es einem Netzwerk-Betreiber möglich ist.

Die Lösung der Aufgabe ist durch die Merkmale des Anspruchs 1 definiert. Eine erfindungsgemäße Schaltungsanordnung umfaßt
a) ein öffentliches Telefonnetz mit Vermittlungszentralen und mit einer INI-Schaltung mit Speicher für das Routing von angeforderten Verbindungen;
b) eine Standard-Schnittstelle zwischen INI-Schaltung und einem Datennetz;
c) einen am Datennetz angeschlossenen Call-Center-Server mit einem Speicher mit Daten für das Routing von eingehenden Anrufen zu verschiedenen Arbeitsplatz-Anschlüssen; und
d) eine Steuerung zum Aktualisieren bzw. Synchronisieren der einerseits in der INI-Schaltung und andererseits im Call-Center-Server registrierten Zustände "frei"/" besetzt" der Arbeitsplatz-Anschlüsse.

Gemäss der Erfindung ist also im öffentlichen Telefon Netzwerk eine INI-Schaltung (INI = Intelligente Netzwerk Infrastruktur) mit einer Standard-Schnittstelle vorgesehen, über welche mit einem vom Telefon-Netzwerk unabhängigen Call-Center-Server Daten ausgetauscht werden können. Ferner verfügen sowohl die INI-Schaltung als auch der Call-Center-Server über einen Speicher mit Daten, welche die zur Verfügung stehenden Arbeitsplätze mit Call-Center-Server Funktion und die gegenwärtig besetzten am Call-Center angeschlossenen Arbeitsplätze bezeichnen. Eine Steuerschaltung sorgt dafür, daß die Daten hinsichtlich der freien und besetzten Arbeitsplätze bzw. Telefonleitungen in der INI-Schaltung und im Call-Center-Server ständig aktuell sind. Im Falle von eingehenden Anrufen nimmt der Call-Center-Server eine Zuteilung zu einem verfügbaren Arbeitsplatz vor und überträgt die vorgenommene Zuteilung an die INI-Schaltung. Bei ausgehenden Rufen wird der "besetzt"-Zustand zunächst von der INI-Schaltung festgestellt, welche die entsprechenden Daten dann an den Call-Center-Server weiterleitet, so daß der Call-Center-Server danach nicht eine Zuteilung an einen Arbeitsplatz vornimmt, dessen Telefonleitung bereits besetzt ist.

Es ist zu beachten, daß bei der Erfindung das Telefon-Netzwerk und die Daten-Kommunikation quasi getrennte Welten darstellen. Die Telefon-Endgeräte sind nicht direkt mit einem Arbeitsplatz-Computer verbunden. Vielmehr wird der Arbeitsplatz-Computer von einem im Prinzip eigenständigen Rechner (Server) angesteuert. Ob ein bestimmter Mitarbeiter telefonisch besetzt ist oder nicht, wird seitens des Telefonnetzwerkes mit Hilfe der INI-Schaltung festgestellt. Dadurch, daß die INI-Schaltung eine Standard-Schnittstelle hat, kann jedes Unternehmen mit einer entsprechend ausgerüsteten Hardware/Software ein leistungsfähiges eigenes Call-Center aufbauen. Der Betreiber des Telefonnetzwerkes muß einfach in einer INI-Schaltung einen Speicherbereich für dieses Unternehmen nur Verfügung stellen und die Steuerung aktivieren, welche sicherstellt, daß die Daten im zur Verfügung gestellten Speicherbereich (SDF = Service Data Function) in und im Call-Center-Server stets auf dem gleichen Stand gehalten sind. Der Netzwerk Betreiber bietet den genannten Betrieb in Form eines kostenpflichtigen Dienstes der interessierten Öffentlichkeit an.

Gemäß einer besonders bevorzugten Ausführungsform ist in der INI-Schaltung eine VPN-Steuerung (VPN = Virtual Private Number) integriert. Eine solche ermöglicht es, mehrere im Telefonnetzwerk geographisch verteilte Endgeräte oder auch PBX-Stationen zu einem Block benachbarter Nummern zusammenzufassen. Ein Unternehmen mit einer Mehrzahl von Filialen kann so nach außen als Einheit auftreten. Der Kunde braucht sich nicht darum zu kümmern, wo die zuständige Filiale ist. Er wählt z.B. die Durchwahlkennziffern, falls er sich von der Zentrale des Unternehmens verbinden lassen will, oder die Durchwahlkennziffern mit einen internem Zusatz, wenn er direkt mit einem bestimmten Sachbearbeiter Kontakt aufnehmen will. Die VPN-Steuerung des Telefonnetzwerkes erkennt aufgrund der Durchwahlkennziffern mit dem Zusatz, zu welchem Endgerät die Verbindung tatsächlich aufgebaut werden muß. Es findet dabei keine indirekte Verbindung statt, d. h. es wird nicht zuerst eine Verbindung zu einer bestimmten Filiale aufgebaut (nämlich diejenige mit der Hauptnummer), um dann von dort erneut über das öffentliche Telefonnetzwerk zum tatsächlich gesuchten Teilnehmer geführt zu werden. Unnötige Netzwerkbelastungen werden mithin vermieden.

Der Call-Center-Server umfaßt eine Datenbank, in welcher die verschiedenen Arbeitsplätze nach unterschiedlichen Kriterien klassiert sein können. Die eingehenden Anrufe können entsprechend den Arbeitsplatz-Qualifikationen direkt zum richtigen Mitarbeiter weitergeleitet werden (skill based routing). Stehen mehrere Arbeitsplätze mit der gleichen Qualifikation zur Verfügung, wird der Anruf zu einem freien Mitarbeiter geleitet. Auf diese Weise kann eine optimale Betreuung des Kunden erreicht werden.

Sollte einmal vorübergehend kein freier Mitarbeiter zur Verfügung stehen, kann der Anruf in eine Warteschleife gegeben werden (queuing).

Wird die Nummer des Call-Centers gewählt, erfolgt innerhalb des Telefon-Netzwerkes eine Signalisierung an die INI-Schaltung. Diese greift auf die im Speicher enthaltenen Daten zurück und kann feststellen, zu welchem Telefon-Endgerät im Netzwerk eine Verbindung hergestellt werden muß. Bevor diese Verbindung aber hergestellt wird, erfolgt vorzugsweise eine Signalisierung über die Standard-Schnittstelle an den Call-Center-Server. Dieser bestimmt (z.B. aufgrund eines Kundendatei-Eintrages), welchem Arbeitsplatz bzw. Telefon-Endgerät der Anruf zugeteilt werden soll. Die Zuteilung wird umgehend an die INI-Schaltung übermittelt, welche infolgedessen eine direkte Verbindung mit dem entsprechenden Endgerät herstellen kann. Selbstverständlich merkt der Anrufende nichts von diesem Daten-Transfer, weil dieser zusammen mit der automatischen Vermittlung innerhalb kürzester Zeit abläuft. Noch bevor der Anruf entgegengenommen wird, kann auf dem Bildschirm des Arbeitsplatz-Computers die kundenspezifische Information angezeigt werden (z.B. letzte Bestellung, gesamter Umsatz des Kunden, frühere Sonderkonditionen etc.). Der den Kunden betreuende Agent kann infolgedessen die Anfrage schneller und kompetenter beantworten.

Aufgrund des Datenaustausches zwischen dem Call-Center-Server und der INI-Schaltung ist es auch möglich, von einem Call-Center Arbeitsplatz nach außen zu telefonieren. Das Telefon-Netzwerk erkennt nämlich die Nummer des Call-Center-Endgerätes und macht eine Meldung an die INI-Schaltung, daß der entsprechende Arbeitsplatz im Moment besetzt ist. Die INI-Schaltung informiert den Call-Center-Server über den aktuellen Status. Es ist also sichergestellt, daß im Speicher des Call-Center-Servers nicht fälschlicherweise ein besetzter Arbeitsplatz als frei eingetragen ist. Solange die entsprechende Leitung besetzt ist, wird dem genannten Arbeitsplatz kein Anruf zugeteilt. Sobald die Verbindung beendet wird, erfolgt eine Meldung des Telefon-Netzwerkes an die INI-Schaltung, welche ihrerseits den Call-Center-Server aufdatiert.

Die erfindungsgemäße Signalisierung erlaubt eine bestmögliche Flexibilität im Unternehmen. Neben reinen Call-Center-Arbeitsplätzen können auch multifunktionale Arbeitsplätze vorgesehen sein. Solche müssen nicht für eingehende Anrufe reserviert sein, sondern können auch für andersartige Arbeiten genutzt werden. Es können ohne weiteres die für eine Sachbearbeitung erforderlichen Telefonate nach außen getätigt werden. Weiter können auch Telemarketing-Tätigkeiten (outbound Call-Center) entfaltet werden. Weil mit derselben Anlage sowohl inbound- als auch outbound-Funktionalitäten wahrgenommen werden können, können die Kapazitäten flexibel auf die verschiedenen Tätigkeiten verteilt werden. Ist z.B. eine Hotline des Unternehmens stark ausgelastet, werden alle Arbeitsplätze für die Erledigung der eingehenden Anrufe eingesetzt. In ruhigeren Zeiten können die gleichen Arbeitsplätze teilweise oder ganz für das Telemarketing verwendet werden.

Die erfindungsgemäße Verbindung zwischen der INI-Schaltung (bzw. einer Intelligenten Netzwerk-Plattform) und einem externen, vom Telefon-Netzwerk unabhängigen Computer mit Call-Center-Funktionalität eröffnet eine Vielzahl von Möglichkeiten. Im folgenden sollen nur einige wenige Beispiele erwähnt werden:
- "Private Numbering Plan": Neue VPN-Teilnehmer können durch eine einfache Programmierung des Call-Center-Servers durch das Unternehmen als Call-Center-Agenten markiert werden. Entsprechend können sie in den Routing-Plan des Call-Center-Servers aufgenommen werden. Die automatische Datenabgleichssteuerung sorgt dafür, daß das öffentliche Telefonnetz das Routing in der gewünschten Form vornimmt.
- "Follow me": Es kann vorgesehen werden, daß sich ein Call-Center-Agent an irgendeinem Arbeitsplatz anmelden kann (namentlich an Arbeitsplätzen, die im Netzwerk geographisch verteilt bzw. entfernt sind). Das Anmelden kann über den Arbeitsplatz-Computer oder das Telefon-Endgerät erfolgen. Im erstgenannten Fall wird der neue Aufenthaltsort des Agenten zunächst im Call-Center-Server registriert und dann an die INI-Schaltung weitergeleitet, im zweitgenannten Fall erfolgt die Registrierung zuerst durch die INI-Schaltung.
- "Time dependent routing": Der Call-Center-Server kann vom Benutzer so programmiert werden, daß das Routing abhängig von der Tageszeit ist. Dies ist z.B. dann sinnvoll, wenn das Unternehmen mehrere Filialen hat, welche zu unterschiedlichen Tageszeiten besetzt sind. Selbstverständlich können auch andere Abhängigkeiten oder Bedingungen vorgegeben werden. Der interessante Aspekt liegt darin, daß diese Programmierung in eigener Regie am eigenen Computer durchgeführt wird und daß das Netzwerk bzw. die INI-Schaltung automatisch entsprechend aufdatiert wird.

Über die Schnittstelle können auch Informationen über das Charging (wem wird das Telefongespräch und zu welchem Tarif belastet), Statistiken (z.B. woher kommen die Anrufe, welche Arbeitsplatz-Qualifikation wird am meisten verlangt) etc. zwischen dem Telefon-Netzwerk und dem Call-Center-Server ausgetauscht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt:

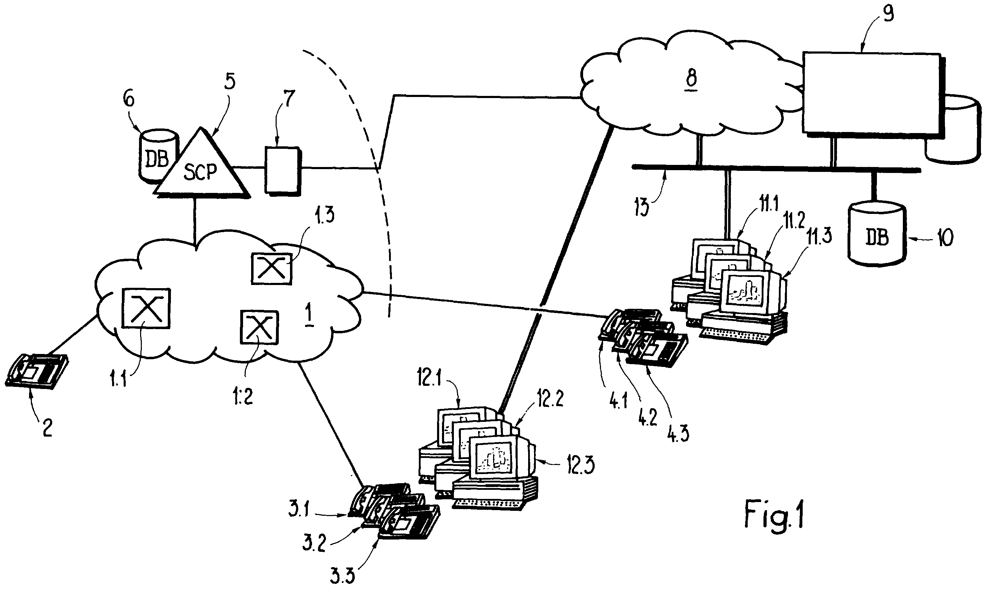

- Fig. 1: Eine schematische Darstellung einer erfindungsgemäßen Schaltungsanordnung.

### Wege zur Ausführung der Erfindung

Es wird ausgegangen von einem öffentlichen Telefonnetz 1, welches z.B. ein ganzes Land abdeckt und eine größere Anzahl von geographisch verteilten Vermittlungszentralen 1.1, 1.2, 1.3 umfaßt. ("Öffentlich" bedeutet in diesem Zusammenhang nicht, daß es sich um eine öffentlich-rechtliche Institution handelt, sondern daß sich jedermann anschließen lassen kann.) Mit 2 ist eine Teilnehmerstation eines am öffentlichen Telefonnetz 1 angeschlossenen Kunden bezeichnet. Ferner sind auch weitere Teilnehmerstationen 3.1, 3.2, 3.3 und 4.1, 4.2, 4.3 mit dem öffentlichen Telefonnetz 1 verbunden. (Die Verbindung kann direkt oder über eine lokale PBX-Station erfolgen.) Die Teilnehmerstationen 3.1, 3.2, 3.3 einerseits und 4.1, 4.2, 4.3 andererseits gehören z.B. zu zwei verschiedenen Filialen des Unternehmens. Selbstverständlich können auch Heimarbeitsplätze in das erfindungsgemäße Call-Center-Konzept integriert werden.

Irgendwo im öffentlichen Telefonnetz 1 befindet sich eine INI-Schaltung 5 (INI = Intelligente Netzwerk Infrastruktur; es ist zu erwähnen, daß natürlich auch mehrere INI-Schaltungen im Netzwerk verteilt vorgesehen sein können). Diese Schaltung (bzw. Steuerung) verfügt unter anderem über einen Speicher 6 für eine Datenbank (DB). Gemäß der Erfindung verfügt die INI-Schaltung 5 über eine Standard-Schnittstelle 7 (als Standard kann z.B. das allgemein bekannte Internet Protokoll TCP/IP verwendet werden).

Unabhängig vom öffentlichen Telefonnetz 1 existiert ein Datennetz 8 (welches in aller Regel ebenfalls öffentlich ist). An diesem ist einerseits die INI-Schaltung 5 über die Standard-Schnittstelle 7 und andererseits ein Call-Center-Server 9 angeschlossen. Zudem sind im vorliegenden Beispiel mehrere Arbeitsplatz-Computer 12.1, 12.2, 12.3 über das Datennetz 8 erreichbar.

Der Call-Center-Server 9 kann z.B. über ein LAN 13 (Local Area Network) auf einen Speicher 10 mit Datenbank (DB) Zugriff haben. Weiter kann er über das LAN 13 mehrere Arbeitsplatz-Computer 11.1, 11.2, 11.3 bedienen. In Fig. 1 wird beispielsweise davon ausgegangen, daß der Call-Center-Server 9 und die Arbeitsplatz-Computer 11.1, 11.2, 11.3 am selben Ort (d. h. in derselben Filiale des Unternehmens) sind, während die übrigen Arbeitsplatz-Computer 12.1, 12.2, 12.3 in einer anderen Stadt sind und über das Datennetz 8 mit dem Call-Center-Server 9 in Verbindung stehen.

Jeder dargestellte Arbeitsplatz des Unternehmens ist mit einem Arbeitsplatz-Computer und einer Teilnehmerstation ausgerüstet. Im folgenden soll nun ein möglicher technischer Verfahrensablauf beispielhaft erläutert werden.

Ein Kunde wählt an seiner Teilnehmerstation 2 die Hauptnummer des Unternehmens. Eine Vermittlungszentrale 1.1 des öffentlichen Telefonnetzes 1 stellt (anhand einer eigenen Datenbank) fest, daß es sich um eine besondere Nummer handelt und sendet deshalb eine Mitteilung an die INI-Schaltung 5, um herauszufinden, mit welchem Teilnehmeranschluß des Telefonnetzes 1 eine Verbindung herzustellen ist.

Die INI-Schaltung 5 hat ihrerseits Zugriff auf eine Datenbank (DB), in welcher die der Nummer zugeordnete Funktion festgehalten ist. Die Datenbank-Abfrage ergibt beispielsweise, daß eine Meldung über die Standard-Schnittstelle 7 und das Datennetz 8 an den Call-Center-Server 9 geschickt werden soll. Bevor also die Anfrage der Vermittlungszentrale 1.1 beantwortet wird, wird eine Rückfrage beim Call-Center-Server 9 gestartet. Die Rückfrage beinhaltet z.B. die vom Teilnehmer angewählte Nummer und die Telefonnummer der Teilnehmerstation 2. Infolgedessen kann der Call-Center-Server 9 aufgrund des Inhalts seiner Datenbank (DB) entscheiden, welchem Arbeitsplatz der Anruf zugeteilt werden soll. (Es kann z.B. festgestellt werden, aus welcher Region der Anruf kommt und welches die nächste Filiale ist. Sollte diese Filiale überlastet sein oder wegen Ferienabwesenheiten nur teilweise besetzt, kann auf eine weiter entfernte Filiale zurückgegriffen werden, in welcher kompetente Berater zur Verfügung stehen.)

In seiner Antwort an die INI-Schaltung 5 übermittelt der Call-Center-Server 9 die dem gefundenen Arbeitsplatz zugeordnete Nummer. Es kann sich dabei um eine Nummer handeln, welche im Rahmen eines virtuellen privaten Nummerierungsplans (VPN) zugeteilt worden ist. Wenn die Antwort an die INI-Schaltung 5 abgesendet ist, wird der entsprechende Arbeitsplatz im Speicher 10 als "besetzt" markiert. Zudem werden die Daten, welche über den anrufenden Kunden vorhanden sind, aufgerufen und an den ausgewählten Arbeitsplatz-Computer gesendet.

Die INI-Schaltung 5 ermittelt aus der übertragenen virtuellen Nummer die zugrundeliegende Anschluß-Nummer, mit welcher die Verbindung zu erstellen ist. Im Speicher 6 wird die Anschluß-Nummer als "besetzt" markiert. Gleichzeitig wird der Vermittlungszentrale 1.1 die genannte Anschluß-Nummer mitgeteilt. Nun kann die Verbindung in an sich bekannter Weise hergestellt werden. Im folgenden wird angenommen, daß die Anschluß-Nummer diejenige der Teilnehmerstation 4.1 ist. Wenn nun das Telefon klingelt, stehen dem Kundenberater die vom Call-Center-Server 9 übersandten Daten am Arbeitsplatz-Computer 11.1 zur Verfügung.

In dieser Weise können alle eintreffenden Anrufe behandelt werden. Durch einen Austausch von Daten wird sichergestellt, daß die für das Unternehmen und seine Arbeitsplätze spezifischen Datenbestände im Speicher 6 der INI-Schaltung 5 und im Speicher 10 des Call-Center-Servers 9 aktuell sind und korrespondieren und zwar hinsichtlich der virtuellen Nummer, des zugeordneten Arbeitsplatzes bzw. Teilnehmer-Anschlusses und hinsichtlich des Zustandes "besetzt"/"frei".

Wird von einem Arbeitsplatz ein Anruf nach außen getätigt, geht folgendes vor sich:

Eine Teilnehmer-Vermittlungszentrale 1.2 des öffentlichen Telefonnetzes 1 stellt fest, daß der Anruf von einem Teilnehmeranschluß ausgeht, welcher einem besonderen Dienst zugeordnet ist. Sie sendet deshalb an die INI-Schaltung 5 eine Mitteilung, welche die Nummer des Anschlusses enthält. Die INI-Schaltung 5 markiert im Speicher 6 den entsprechenden Anschluß als "besetzt". Eine Datensynchronisationssteuerung sorgt zudem dafür, daß eine weitere Mitteilung an den Call-Center-Server 9 geht und daß dieser in seinem Speicher 10 den entsprechenden Arbeitsplatz als "besetzt" markiert. Im übrigen wird die Vermittlungszentrale zur Herstellung der gewünschten Verbindung ermächtigt (sofern die Verbindung zwischenzeitlich nicht schon erstellt worden ist). Sollte nun der Call-Center-Server 9 einen späteren Anruf zuteilen müssen, weiß er, welche Arbeitsplätze besetzt und welche frei sind und kann entsprechend disponieren.

Die obigen Ausführungen machen klar, daß einerseits durch die Konzentration der relevanten Information in der INI-Schaltung 5 und im Call-Center-Server 9 eine hohe Flexibilisierung möglich ist und dass andererseits durch eine teilweise parallele Führung von Daten eine Unabhängigkeit des Unternehmens vom Netzwerk-Betreiber erreicht werden kann. Dabei stellt die Standard-Schnittstelle 7 quasi den Angelpunkt dar.

Zusammenfassend ist festzustellen, dass es durch die Erfindung möglich wird, Call-Center mit einem breiten Leistungsspektrum im wesentlichen unabhängig von der Hardware des Netzwerk-Betreibers zu führen. Aus der Sicht des Netzwerk-Betreibers können weitere Dienste angeboten werden, ohne substantielle Erweiterung der Hardware. Die bestehenden INI-Schaltungen können einfach durch eine geeignete Programmierung angepaßt werden.

## Patentansprüche

1. Schaltungsanordnung zum Betreiben eines Call-Centers, umfassend:
a) ein öffentliches Telefonnetz (1) mit Vermittlungszentralen (1.1, 1.2, 1.3) und mit einer INI-Schaltung (5) mit Speicher (6) für das Routing von angeforderten Verbindungen;
b) eine Standard-Schnittstelle (7) zwischen INI-Schaltung (5) und einem Datennetz (8);
c) einen am Datennetz (8) angeschlossenen Call-Center-Server (9) mit einem Speicher (10) mit Daten für das Routing von eingehenden Anrufen zu verschiedenen Arbeitsplatz-Anschlüssen (3.1, 3.2, 3.3, 4.1, 4.2, 4.3); und
d) eine Steuerung zum Aktualisieren bzw. Synchronisieren der einerseits in der INI-Schaltung (5) und andererseits im Call-Center-Server (9) registrierten Zustände "frei"/"besetzt" der Arbeitsplatz-Anschlüsse.

2. Schaltungsanordnung nach Anspruch 1, dadurch gekennzeichnet, daß die INI-Schaltung (5) mit einer Steuerung zur Unterstützung eines virtuellen privaten Nummerierungsplans ausgestattet ist.

3. Verfahren zum Betreiben eines Call-Centers auf der Basis einer Schaltungsanordnung gemäß Anspruch 1 mit folgenden Schritten:
e) in einer Vermittlungszentrale (1.1, 1.2, 1.3) wird die Nummer des von einem Teilnehmer angewählten Telefonanschlusses an eine INI-Schaltung (5) übermittelt, falls die fragliche Nummer einem vordefinierten Dienstkreis angehört;
f) die INI-Schaltung (5) übermittelt die Nummer über eine Standard-Schnittstelle (7) der INI-Schaltung (5) an den betroffenen Call-Center-Server (9);
g) der Call-Center-Server (9) wählt gestützt auf seinen Datenbestand (DB) einen zur Verfügung stehenden und geeigneten Arbeitsplatz aus und übermittelt dessen Anschluß-Nummer über die Standard-Schnittstelle (7) an die INI-Schaltung (5);
h) gleichzeitig wird im genannten Datenbestand der ausgewählte Arbeitsplatz als "besetzt" markiert;
i) die INI-Schaltung (5) übermittelt der Vermittlungszentrale die Anschluß-Nummer des vom Call-Center-Server (9) ausgewählten Arbeitsplatzes, so daß im Telefonnetz (1) die gewünschte direkte Verbindung hergestellt werden kann.

4. Verfahren nach Anspruch 3 mit zusätzlich folgenden Schritten:
a) im Fall eines von einem zu einem vordefinierten Dienstkreis gehörenden Arbeitsplatz ausgehenden Anrufes wird in einer Vermittlungszentrale (1.1, 1.2, 1.3) die Nummer des Arbeitsplatz-Anschlusses an eine INI-Schaltung (5) übermittelt;
b) die INI-Schaltung (5) markiert den Arbeitsplatz-Anschluß in ihrem Speicher (6) als "besetzt" und übermittelt über die Standard-Schnittstelle (7) eine entsprechende Mitteilung an den betroffenen Call-Center-Server (9);
c) der Call-Center-Server (9) registriert den "besetzt"-Zustand in seinem Speicher (10), um bei nachfolgend eintreffenden Anrufen dem besetzten Arbeitsplatz keinen der Anrufe zuzuteilen.
